# EUROPÄISCHE PATENTANMELDUNG

(11) **EP 1 369 790 A2**
(43) Veröffentlichungstag der Anmeldung: **10.12.2003**
(21) Anmeldenummer: 03101382.4
(22) Anmeldetag: 16.05.2003
(51) Int. Cl.: G06F 17/24

(54) **Verfahren zur dynamischen Generierung strukturierter Dokumente**

(30) Priorität: 29.05.2002 DE 10223978; 18.07.2002 DE 10232674
(71) Anmelder: SIEMENS AKTIENGESELLSCHAFT, 80333 München (DE)
(72) Erfinder: Scheering, Christian, Dr., 33689 Bielefeld (DE)

(57) **Zusammenfassung**

Die Erfindung betrifft ein Verfahren zur dynamischen Generierung strukturierter Dokumente an einem mit einem Client kommunizierenden vorzugsweise in einer "Embedded System"-Architektur ausgestalteten Leitrechner. Dabei werden Anforderungsdaten des Clients am Leitrechner empfangen und daraus Anfrageparameter extrahiert, die durch ein Kontrollmodul auf einen Befehlssatz eines architekturspezifischen Schnittstellenmodul des Leitrechners abgebildet werden. Anschließend erfolgt eine dynamische Generierung des strukturierten Dokuments unter Verwendung mindestens eines Vorlagedokuments mit enthaltenen Dienstnehmern, wobei die Dienstnehmer unter Hinzuziehung der abgebildeten Anfrageparameter in einer Laufzeitumgebung des Schnittstellenmoduls ausgeführt werden und nach erfolgter Ausführung Inhalte und/oder Struktur des strukturierten Dokuments definieren. Das dynamisch generierten strukturierte Dokument wird schließlich an den Client übermittelt.

## Beschreibung

Die Erfindung betrifft ein Verfahren für eine dynamische Generierung strukturierter Dokumente zur Implementierung in mit paketorientierten Netzwerken verbundenen Leitrechnern.

Paketorientierte Netzwerke wie beispielsweise das WWW (World Wide Web), lokale Netzwerke (Local Area Networks, LAN) usw. bilden in vielen Anwendungsbereichen zunehmend die Hauptquelle für einen Informationsaustausch für Bediener von Rechnersystemen.

Ein Zugriff auf paketorientierte Netzwerke erfolgt üblicherweise unter Verwendung eines über Datenleitungen an einen Leitrechner - in der Fachwelt auch "Server" genannt - bzw. einem Verbund von Leitrechnern angebundenen Arbeitsplatzrechner, auf dem eine - dem Fachmann als "Browser" bekannte - Software zur Darstellung der auf den Leitrechnern verfügbaren Information bzw. zur Navigation innerhalb der verfügbaren Informationen abläuft.

Ein Hauptbestandteil derartiger Informationen bilden in Textformat vorliegende Daten, die ferner Graphiken, Querverweise auf verwandte Informationen - dem Fachmann auch als "Links" bekannt - oder auch multimediale Komponenten wie Videosequenzen, Audioinformationen usw. enthalten. Diese Informationen werden zwischen einem mit Hilfe eine Adresse auswählbaren Leitrechner und einem zugehörigen Kommunikationsendpunkt - in der Fachwelt auch als "Client" bezeichnet, beispielsweise in Form eines Browsers - meist in Form strukturierter Dokumente ausgetauscht. Hierunter ist eine Organisation von Daten einer abgrenzbaren Menge zu verstehen, die neben der eigentlichen, dem Benutzer darzustellenden Information auch rechnerlesbare Instruktionen über deren Struktur oder deren Darstellung enthalten. Für den Austausch strukturierter Dokumente im WWW wird heute überwiegend das HTML-Format (Hypertext Markup Language) verwendet.

Ein Leitrechner bzw. Leitrechnerverbund zur Bereitstellung von Informationen über ein paketorientiertes Netzwerk - dem Fachmann auch als "Web Server" bekannt - verfügt bekannterweise über großzügig dimensionierte Ressourcen, d.h. Prozessorleistung, Arbeitsspeicherkapazität usw., die im Allgemeinen für die Ausführung von diese Bereitstellung unterstützende Softwareprodukte nahezu keine Limitierung darstellt.

Beim erfindungsgemäßen Verfahren werden im folgenden jedoch auch Leitrechner betrachtet, die in ihren Ressourcen limitiert sind. Eine derartige Limitierung von Ressourcen kann beispielsweise in einer begrenzten Arbeitsspeicherkapazität begründet sein, die z.B. bei in einer "Embedded System"-Architektur ausgestalteten Leitrechnern vorliegt. Diese Embedded System-Architektur ist bei vielen sogenannten mikrocontroller-basierten Leitrechnern zu finden.

Ein Leitrechner mit begrenzten Ressourcen liegt beispielsweise bei Kommunikationseinrichtungen zur Vermittlung von Kommunikationsendgeräten vor, bei der die betreffenden Kommunikationseinrichtungen zusätzlich mit einer Funktionalität zum Austausch von Informationen über ein paketorientiertes Netzwerk ausgestattet sind. Ein derartiger Austausch von Informationen kann z.B. für Wartungszwecke erforderlich sein.

Zur Datenübertragung in paketorientierten Netzwerken, wie beispielsweise dem WWW, wird im allgemeinen das Protokoll HTTP (Hypertext Transport Protocol) verwendet. HTTP ist ein allgemeines, statusloses, objektorientiertes Protokoll. Es beschreibt einen definierten Satz von Nachrichten und Antworten, mit denen ein Client und ein Leitrechner während einer HTML-Sitzung kommunizieren. Eine Anfrage eines Browsers an den Leitrechner nach einem strukturierten Dokument entspricht beispielsweise einer HTML-Sitzung. Das HTTP-Protokoll dient außerdem einer Adressierung von Objekte über einen u.a. einer Adressierung des Leitrechners bzw. von dort lokalisierten Dateien dienenden sogenannten URL (Uniform Resource Locator).

Eine Bereitstellung strukturierter Dokumente unter ausschließlicher Verwendung eines ausschließlichen HTML-Formats ist für statische Informationsinhalte ausreichend, jedoch für erweiterte Informationsübermittlung ungenügend. In vielen Fällen ist es gewünscht, einem Client strukturierte Dokumente zu übermitteln, deren Inhalt - in der Fachwelt oftmals als "Content" bezeichnet - oder Gestaltung bzw. Struktur von bestimmten Bedingungen abhängt. Eine derartige Bedingung kann beispielsweise die von einem Bediener eingestellte Sprache sein, in der die Information am Clientrechnersystem darzustellen ist. In den beschriebenen Fällen erweist es sich oftmals als technisch effizienter, den Inhalt oder die Struktur des strukturierten Dokuments erst nach einem entsprechend zu erfolgenden Aufruf des Clients in Laufzeit am Leitrechner zu definieren. Dabei sendet der Client Anforderungsdaten an den Leitrechner und erhält ein diesen Anforderungsdaten entsprechend gestaltetes strukturiertes Dokument. Dieser Vorgang wird daher als dynamische Generierung strukturierter Dokumente bezeichnet, im Falle von dynamisch generierten HTML-Dokumenten wird oftmals auch von DHTML (dynamische HTML) gesprochen.

Ein häufig anzutreffender Einsatzfall dynamisch generierter strukturierter Dokumente ist eine Suchanfrage in Datenbanken. Das Suchergebnis wird dabei in einem dynamisch erzeugten, strukturierten Dokument an den Client übermittelt.

Im folgenden wird zugunsten einer leichteren Lesbarkeit auf strukturierte Dokumente mit dem Begriff "HTML-Seite" Bezug genommen. Mit diesem Begriff ist stets eine Bezugnahme auf strukturierte Dokumente im Sinne der eingangs angeführten allgemeinen Definition inbegriffen.

Für eine dynamische Generierung bzw. Gestaltung von HTML-Seiten existieren unterschiedliche Verfahren, die im folgenden dargestellt werden.
1. Unter Verwendung sogenannter Gateway-Schnittstellen wie CGI (Common Gateway Interface), ISAPI (Internet Server Application Programming Interface) usw. kann ein Browser eine HTTP-Anforderung für eine ausführbare Anwendung statt einer Anforderung einer statischen HTML-Seite senden. Die vom Client aufgerufene Anwendung wird auf dem Leitrechner ausgeführt. Die Anwendung kann die mit der Anforderung verbundenen Daten lesen und ermitteln, welche Werte mit der Anforderung übergeben wurden, z.B. Werte, die ein Bediener durch das Abschicken eines ausgefüllten HTML-Formulars übermittelt. Die Anwendung analysiert dann die Werte, um relevante Informationen zu ermitteln und generiert eine HTML-Seite, die an den Client gesendet wird. Ein Nachteil von Gateway-Programmen ist, dass sie schwer zu erstellen und zu verändern sind. Gateway-Programme sind nicht in HTML-Dateien integriert. Für sie ist ein gänzlich anderer Entwicklungsprozess als für HTML-Dateien erforderlich.
2. Ein weiteres Verfahren für die Handhabung dynamischer Seiteninhalte oder -strukturen bieten auf dem Leitrechner ausführbare Laufzeitumgebungen. Dabei werden Techniken wie beispielsweise Active Server Pages (ASP), Java Server Pages (JSP) oder "echte" Skriptsprachen wie Perl, PHP, Python o.a. angewendet. Die auf dem Leitrechner ausgeführten Skripten dienen wie oben einer Generierung dynamischer HTML-Seiten. Bei der Verarbeitung dieser Skripten wird dabei ein Skriptinterpreter oder, im Fall, von Java-Komponentenaufrufen - auch "JavaBeans" genannt - eine "Java Virtual Machine" (JVM) zur Ausführung verwendet. Diese JavaBeans können wiederum in Java Server Pages oder reinen serverseitig ausführbaren sogenannten "Servlets" eingebunden werden. Dabei stellt eine Java Server Page eine Mischung aus statischen HTML-Ausdrücken und dynamischen Objekt- oder JavaBean-Aufrufen - im folgenden auch mit "Dienstnehmer" bezeichnet - dar. Die Java Server Page wird zunächst im Rahmen einer sogenannten "Servlet Engine" serverseitig in ein Servlet umgesetzt. Wird im folgenden durch einen Client der zu dieser Java Server Page korrespondierende URL durch einen externen HTML-Browser aufgerufen, ruft die Servlet Engine ihrerseits das "vorkompilierte" Servlet auf, das dann den in der Java Server Page definierten HTML-Inhalt unter Verwendung der eingebundenen JavaBeans dynamisch erzeugt.
3. Statt einer leitrechnerseitigen Abarbeitung von Skripten kann auch die objektorientierte Programmiersprache Java für eine dynamische HTML-Seitengenerierung dazu eingesetzt werden, interaktive Programme in Form eines "Applets" in einem Browser ablaufen zu lassen. Ein Applet ist ein Programm, welches innerhalb der HTML-Seite eingebunden wird. Das eigentliche Programm wird auf dem Leitrechner vorkompiliert und eine Referenz darauf im HTML-Quellcode eingebunden. Bei einem Aufruf wird das Javaprogramm mittels der auf dem Zielrechner des Clients befindlichen JVM lauffähig gemacht und gestartet. Die JVM ist auf jedem Betriebssystem installierbar und verarbeitet den gegebenenfalls vorkompilierten Programmkode des Leitrechners in einen am Zielrechner ausführbaren Maschinenkode.
   Während JavaBeans softwaretechnisch Komponenten vergleichbar mit dem "Component Object Model", abgekürzt COM der Microsoft Corp. darstellen, handelt es sich bei Applets um kleine Anwendungen, die von der JVM eines Browsers ausgeführt werden und eine Schnittstelle zu diesem bieten.
4. Eine weitere Möglichkeit für die dynamische Generierung von HTML-Seiten ist die Verwendung von "JavaScript". Im Gegensatz zu den vorgenannten Skripttechniken werden im Format JavaScript geschriebene Skripten nicht durch den eine HTML-Seite bereitstellenden Leitrechner, sondern durch den Browser am Zielrechner ausgeführt. Der Java-Skript-Quellcode wird dabei direkt in die HTML-Seite eingebunden. JavaScript lehnt sich in der Syntax an Java an. Im Gegensatz zu Java ist JavaScript allerdings nicht vorkompiliert.

Mit dem Begriff "Laufzeitumgebung" wird im folgenden eine Softwareumgebung auf Leitrechnerseite zur Ausführung von Skripten, Komponenten - beispielsweise gemäß obigen Punkt 2 - und/oder vorkompilierten Skripten bezeichnet. Mit dem Begriff "Dienstnehmer" - in der Fachwelt als "Serverkomponenten" bekannt, beispielsweise als Bestandteil einer "Java Server Page", JSP - wird auf Skripten oder Komponenten innerhalb eines HTML-Quellkodes als Vorlage dienenden HTML-Dokuments Bezug genommen, die zu ihrer leitrechnerseitigen Ausführung eine Laufzeitumgebung benötigen.

Wird ein Leitrechner bzw. Leitrechnerverbund mit begrenzten Ressourcen zur Bereitstellung von Dienstnehmern für eine dynamische Gestaltung enthaltende HTML-Seiten eingesetzt, ergibt sich oftmals das Problem, dass derlei "Vorlagedokumente" gemäß den oben beschriebenen Techniken für Leitrechner mit ausreichenden Ressourcen nicht direkt auf einen Leitrechner mit begrenzten Ressourcen übertragbar bzw. für diesen mit einfachen Konfigurationsmaßnahmen wiederverwendbar sind. Vorlagedokumente, die die oben genannten Techniken beinhalten, erfordern nämlich meist eine Arbeitsspeicherkapazität und/oder Rechengeschwindigkeit für eine leitrechnerseitige Bearbeitung, die ein Leitrechner mit begrenzten Ressourcen nicht erbringen kann.

Damit ergibt sich weiterhin das Problem, für einen Leitrechner ausreichender Ressourcen bereits verwirklichte Vorlagedokumente bei einer Portierung auf Leitrechner mit begrenzten Ressourcen von der Entwurfsphase beginnend noch einmal zu entwickeln, obwohl die zu verwirklichende Funktionalität bei beiden Leitrechnervarianten identisch oder zumindest nahezu identisch sein soll.

Aufgabe der Erfindung ist es, ein Verfahren anzugeben, das eine Generierung strukturierter Dokumente mit dynamischem Inhalt und/oder dynamischer Struktur ermöglicht, wobei eine Portierung der Vorlagedokumente zwischen ressourcenbegrenzten Leitrechnern und Leitrechnern mit ausreichenden Ressourcen in einfacher Weise möglich sein soll.

Eine Lösung der Aufgabe erfolgt hinsichtlich ihres Verfahrensaspekts durch ein Verfahren mit den Merkmalen des Patentanspruchs 1 und hinsichtlich ihres Vorrichtungsaspekts durch eine Anordnung mit den Merkmalen 10.

Erfindungsgemäß werden hierzu von einem Client übermittelte Anforderungsdaten für eine Anforderung eines dynamisch zu gestaltenden strukturierten Dokuments an einem Leitrechner empfangen und Anfrageparameter aus den Anforderungsdaten extrahiert. Diese Anfrageparameter werden auf einen Befehlssatz eines architekturspezifischen Schnittstellenmodul am Leitrechner abgebildet. Unter dieser Abbildung ist zu verstehen, dass die Anforderungsparameter in für das Schnittstellenmodul verständliche Befehle ersetzt werden oder dass fallweise Anforderungsparameter auch ignoriert werden, für die kein zugehöriger Befehl im Befehlssatz des Schnittstellenmoduls existiert. Unter Verwendung mindestens eines - beispielsweise am Leitrechner oder in einem anderen mit dem Leitrechner über ein paketorientiertes Netzwerk verbundenen Rechnersystem gespeicherten - Vorlagedokuments wird ein den anfangs erhaltenen Anforderungsdaten entsprechendes strukturiertes Dokument erzeugt. Das Vorlagedokument enthält einen oder mehrere Dienstnehmer, die unter Heranziehung der abgebildeten Anfrageparameter in einer vom Schnittstellenmodul zur Verfügung gestellten Laufzeitumgebung ausgeführt werden. Als Ergebnis dieser Ausführung stehen Inhalte - beispielsweise Ergebnisse einer Suchanfrage in einer Datenbank in einer den Anforderungsdaten entsprechenden Sprache - und/oder Struktur - beispielsweise eine entsprechende Gliederung des strukturierten Dokuments - des in dieser Weise dynamisch generierten strukturierten Dokuments zur Verfügung. Dieses dynamisch generierte strukturierte Dokument wird an den Client übermittelt.

Ein wesentlicher Vorteil des erfindungsgemäßen Verfahrens ist darin zu sehen, dass ein - beispielsweise in Form einer Java Server Page vorliegendes - Vorlagedokument sowohl in einem Leitrechner mit begrenzten Ressourcen als auch in einem Leitrechner mit ausreichenden Ressourcen zur dynamischen Generierung von strukturierten Dokumenten herangezogen werden kann. Vorteilig beschränkt sich damit der Entwicklungsaufwand für ein derartiges Vorlagedokument auf ein einziges Vorlagedokument, dass nach abgeschlossener Entwicklung auf beiden genannten Leitrechnerumgebungen zum Einsatz kommen kann.

Vorteilhafte Weiterbildungen der Erfindung sind in den Unteransprüchen angegeben.

In vorteilhafter Weise werden sogenannte JavaBeans zur Definition der Dienstnehmer des Vorlagedokuments verwendet, die in Verbindung mit Java-Laufzeitumgebungen die derzeit ausgereifteste Technik zur Portierung auf verschiedene Leitrechnerarchitekturen darstellt.

Besonders vorteilhaft ist das erfindungsgemäße Verfahren für JavaBeans einzusetzen, da diese eine verhältnismäßig einfache Aufrufsyntax bereitstellen. Der Einsatz von JavaBeans ermöglicht zudem - unter Verwendung lediglich einer vordefinierten JavaBean-Klasse - in vorteilhafter Weise eine einfache Generierung des strukturierten Dokuments in einer clientseitig bevorzugten Sprache.

In vorteilhafter Weise liegen sprachabhängige HTML-Inhalte in Form von Spracheigenschaftsdaten vor, auf die während der dynamischen Seitegenerierung mittels Dienstnehmern zugegriffen wird. Die bevorzugte Sprache kann durch den Leitrechner beispielsweise anhand einer Abfrage einer am Clientsystem gesetzten Ländereinstellung oder einer Einstellung der Systemsprache ermittelt werden. In vorteilhafter Weise ist damit ein Einsatz der selben Spracheigenschaftsdaten sowie der selben Vorlagendokumente sowohl in einem Leitrechner mit begrenzten Ressourcen als auch in einem Leitrechner mit ausreichenden Ressourcen gegeben.

Ein Ausführungsbeispiel der Erfindung wird im folgenden anhand der Zeichnung näher erläutert.

Dabei zeigen:
- Fig. 1:: ein Strukturbild zur schematischen Darstellung des Zusammenwirkens von Funktionselementen bei der dynamischen Generierung eines strukturierten Dokuments; und
- Fig. 2:: eine schematische Darstellung von Strukturelementen eines Vorlagedokuments.

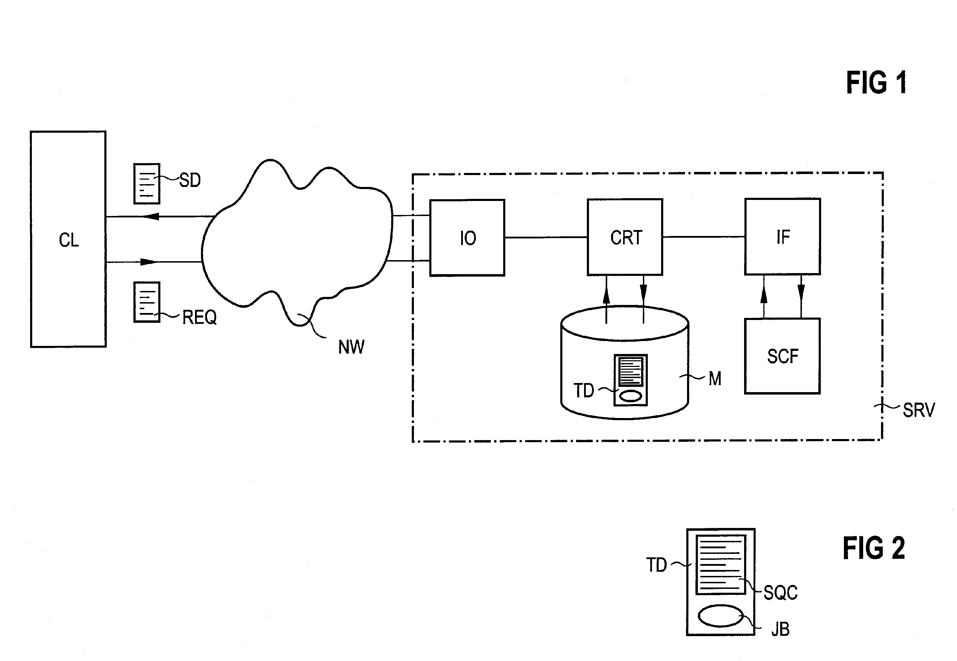

In Fig. 1 ist ein über ein paketorientiertes Netzwerk NW mit einem Leitrechner SRV verbundener Client CL dargestellt. Der - z.B. in Form eines Arbeitsplatzrechners mit einem darauf ablaufenden Browser vorliegende - Client sendet über das paketorientierte Netzwerk NW Anforderungsdaten REQ an den Leitrechner SRV und erhält ein gemäß dieser Anforderungsdaten unter Anwendung eines noch darzustellenden Verfahrens ein dynamisch gestaltetes strukturiertes Dokument SD zurück. Der Leitrechner SRV verfügt über eine "Embedded System"-Architektur, d.h. er verfügt über begrenzte Arbeitsspeicherund/oder Rechnleistungsressourcen.

Die ohne Bezugszeichen dargestellten Richtungspfeile sowie zugehörige Linien dienen in der Zeichnung einer leichteren Veranschaulichung der ablaufenden Prozesse, sind jedoch hinsichtlich der paketorientierten, an sich verbindungslos ablaufenden Prozesse jedoch bildlich zu verstehen.

Eine dem Leitrechner SRV zugeordnete Ein-/Ausgabeeinheit IO dient einem bidirektionalen Austausch von Daten des Leitrechners SRV über das paketorientierte Netzwerk NW mit dem Client CL.

Ein mit der Ein-/Ausgabeeinheit IO verbundenes Kontrollmodul CRT übernimmt von der Ein-Ausgabeeinheit IO erhaltene Daten zur weiteren Bearbeitung bzw. übergibt bearbeitete Daten an die Ein-/Ausgabeeinheit IO. Das Kontrollmodul greift auf ein Vorlagedokument TD zu, das beispielsweise in einer dem Leitrechner SRV zugeordneten Speichereinheit M gespeichert ist. Alternativ kann das Dokument TD in einer beliebigen Rechnereinheit - unter anderem auch auf der Rechnereinheit des Clients CL - gespeichert sein, wobei das Kontrollmodul auf dessen Daten über das paketorientierte Netzwerk NW sowie über die Ein-Ausgabeeinheit IO zugreift.

Das Kontrollmodul ist weiterhin mit einem Schnittstellenmodul IF verbunden, das seinerseits mit Leitrechnerkontrollfunktionen SCF kommuniziert. Diese Leitrechnerkontrollfunktionen SCF sind beispielsweise als architekturabhängige, jeweilige anwendungsprogrammabhängige und/oder betriebssystemabhängige Befehle des Leitrechners SRV zu verstehen. Dem Schnittstellenmodul IF obliegt also - wie im weiteren erläutert - insbesondere die Aufgabe einer Anpassung an unterschiedliche Leitrechnerarchitekturen.

Die Funktionseinheiten des Leitrechners, insbesondere das Kontrollmodul CRT, das Schnittstellenmodul IF, die Ein-/ Ausgabeeinheit IO, sowie Leitrechnerkontrollfunktionen SCF können in fachüblicher Weise, beispielsweise in einer Client-Server-Beziehung auch auf mehrere Rechnersysteme aufgeteilt sein und - beispielsweise über das paketorientierte Netzwerk NW -untereinander Daten austauschen.

Hinsichtlich begrenzter Ressourcen des Leitrechners SRV sind Maßnahmen notwendig, das für einen Leitrechner ausreichender Ressourcen entwickelte Vorlagedokument TD in gleicher Weise auf dem Leitrechner SRV für eine dynamische Generierung von strukturierten Dokumenten SD heranzuziehen. Vor einer Beschreibung dieser Maßnahmen soll unter weiterer Bezugnahme auf die Funktionseinheiten der Fig. 1 zunächst die Struktur des Vorlagedokuments TD näher betrachtet werden.

Fig. 2 zeigt einen strukturellen Aufbau des Vorlagedokuments TD. Das Vorlagedokument TD besteht aus einem Quellkodeteil zur Definition statischer Inhalte, dem sogenannten "Skelett" SQC. Für den Fall, dass das Vorlagedokument durch das HTML-Format (Hypertext Markup Language) definiert ist, wird dieser Teil in Fachkreisen auch als "HTML-Skeleton" bezeichnet. Das Skelett SQC besteht aus einem Quellkode und einem Textteil, die statische Inhalte zur Definition des zu generierenden dynamischen strukturierten Dokuments SD enthalten. Außerdem sind - nicht dargestellte - separate Spracheigenschaftsdaten, eingebettete Graphiken bzw. andere Multimediakomponenten - oder auch Verweise auf diese - Bestandteil des Skeletts SQC.

Eine Definition von dynamischen Anteilen des strukturierten Dokumentes SD erfolgt unter Verwendung von JavaBeans JB als weiteren Bestandteil des Vorlagedokuments TD. Durch Ausführung der JavaBeans des beispielsweise als "Java Server Page" ausgestalteten Vorlagedokuments TD in einer entsprechenden Laufzeitumgebung, beispielsweise einem sogenannten - weiter unten erklärten - "Parser" oder einer JVM (Java Virtual Machine) werden unter Heranziehung der Anforderungsdaten REQ dynamische Inhalte des strukturierten Dokuments SD erzeugt.

Unter Bezugnahme auf Fig. 1 wird nun die dynamische Generierung des strukturierten Dokuments SD im Leitrechner SRV erläutert. Die z.B. in einer HTTP-Anfrage an den Leitrechner SRV übersandten Anforderungsdaten SD werden von der Ein-/Ausgabeeinheit IO empfangen und an das Kontrollmodul CRT weitergeleitet.

Das Kontrollmodul CRT, das Vorlagedokument TD und die Schnittstelleneinheit IF sind in ihrer Funktion gemäß eines Entwurfsmusters - in der Fachwelt auch "Design Pattern" genannt - gestaltet, das als "Model/View/Controller" bezeichnet wird.

Das - gemäß des genannten Entwurfsmuster mit dem "Model" zu identifizierende - Schnittstellenmodul IF besteht aus einer anwendungsspezifischen, architekturabhängigen Software, die beispielsweise Datenbankzugriffe oder einen Zugriff auf Konfigurationsparameter des Leitrechners mit einem definierten Befehlssatz gestattet. Dieser Zugriff erfolgt also allgemein auf Leitrechnerkontrollfunktionen SCF.

Das - gemäß des genannten Entwurfsmuster mit dem "Controller" zu identifizierende - Kontrollmodul CRT vermittelt die von der Ein-/ Ausgabeeinheit IO übergebenen Anforderungsdaten REQ und dem architekturspezifischen Schnittstellenmodul IF. Dabei werden - nicht dargestellte - Anfrageparameter aus den Anforderungsdaten REQ extrahiert, welche an das Schnittstellenmodul IF weitergereicht werden. Unter Zusammenarbeit mit dem - gemäß des genannten Entwurfsmuster mit dem "View" zu identifizierende - Vorlagedokument TD wird das entsprechend der Anforderungsdaten REQ zu erzeugende strukturierte Dokument SD dynamisch erzeugt und an die Ein-/Ausgabeeinheit IO übergeben, von der das strukturierte Dokument SD über das paketorientierte Netzwerk an den Client CT übermittelt wird.

In einem ressourcenbegrenzten System wie dem vorliegenden Leitrechner SRV wird die Laufzeitumgebung zur korrekten Umsetzung der JSP nicht mit einer extrem rechen- und speicherplatzaufwändigen JVM in Verbindung mit einer Servlet-Engine gebildet. Statt dessen wird die Laufzeitumgebung durch "schlankere" im übrigen von der Architektur des Leitrechners SRV unabhängige Softwareimplementierungen im Kontrollmodul CRT realisiert, die beispielsweise in der Sprache C++ programmiert sind. Im wesentlichen besteht diese Laufzeitumgebung aus einem vereinfachten Parser und einem sogenannten "Scheduler". Der Parser sowie der Scheduler sind in der Zeichnung nicht dargestellt.

Ein Parser ist ein Programm, das Textteile eines Dokumentes durch Befehle oder Code ersetzt. Zu diesem Zweck nimmt der Parser eine semantische Analyse des Textes vor. Ein Scheduler führt Funktionen einer Ablaufsteuerung durch.

Durch diese Laufzeitumgebung werden die im Skelett SQC des Vorlagedokuments eingebetteten JavaBeans JB bzw. Aufrufe dieser JavaBeans JB durch den Parser und den Scheduler extrahiert und auf einen korrespondierenden Befehlssatz des Schnittstellenmoduls IF abgebildet. Diese Abbildung kann dabei sehr vereinfacht gestaltet sein, indem sie sich beispielsweise auf einen sehr kleinen Ausschnitt der JavaBean- bzw. JSP-Syntax beschränkt. Dies ermöglicht eine ebenso einfache, "schlanke" Ausgestaltung des Parsers ohne eine JVM oder eine Servlet-Engine auf einem Embedded System.

Ein Beispiel derartiger JavaBean-Aufrufe betrifft die Darstellung ansonsten identischer strukturierter Dokumente in unterschiedlichen Sprachen. Die sprachabhängige Generierung des zu erzeugenden strukturierten Dokuments SD wird dabei durch eine spezielle JavaBean JB im Vorlagedokument TD realisiert, die über das Schnittstellendokument IF auf sogenannte "Property Files", Eigenschaftsdateien, zugreift, um die Zielausdruck im generierten strukturierten Dokument SD zu erzeugen.

## Patentansprüche

1. Verfahren zur dynamischen Generierung strukturierter Dokumente (SD) an mindestens einem mit einem Client (CL) kommunizierenden Leitrechner (SRV), umfassend die Schritte:
• Empfang von Anforderungsdaten (REQ) des Clients (CL) am Leitrechner (SRV),
• Extraktion von Anfrageparametern aus den Anforderungsdaten (REQ),
• Abbildung der Anfrageparameter durch ein Kontrollmodul (CRT) auf einen Befehlssatz eines softwarearchitekturspezifischen Schnittstellenmodul (IF) des Leitrechners (SRV),
• dynamische Generierung des strukturierten Dokuments (SD) unter Verwendung mindestens eines Vorlagedokuments (TD) mit enthaltenen Aufrufen von Dienstnehmern (JB),
wobei die Dienstnehmer (JB) unter Hinzuziehung der abgebildeten Anfrageparameter in einer Laufzeitumgebung des Kontrollmoduls (CRT) ausgeführt werden und nach erfolgter Ausführung Inhalte und/oder Struktur des strukturierten Dokuments (SD) definieren,
• Übermittlung des dynamisch generierten strukturierten Dokuments (SD) an den Client (CL).

2. Verfahren nach Anspruch 1,
**dadurch gekennzeichnet,**
**dass** das Vorlagedokument (TD) aus einem Bereich zur Darstellung statischer Teile (SQC) und aus einem Dienstnehmer enthaltenden (JB) Bereich besteht.

3. Verfahren nach einem der Ansprüche 1 bis 2,
**dadurch gekennzeichnet,**
**dass** der Quellkode des Vorlagedokuments (TD) gemäß des HTML-Protokolls gestaltet ist.

4. Verfahren nach einem der vorhergehenden Ansprüche,
**dadurch gekennzeichnet,**
**dass** die Dienstnehmer (JB) des Vorlagedokuments in Form von JavaBeans (JB) vorliegen.

5. Verfahren nach einem der Ansprüche 2 bis 4,
**dadurch gekennzeichnet,**
**dass** das Vorlagedokument (TD) Spracheigenschaftsdaten enthält.

6. Verfahren nach einem der vorhergehenden Ansprüche,
**dadurch gekennzeichnet,**
**dass** das Schnittstellenmodul (IF) eine Java-Laufzeitumgebung und/oder eine Servlet-Engine nachbildet.

7. Verfahren nach einem der vorhergehenden Ansprüche,
**dadurch gekennzeichnet,**
**dass** das Schnittstellenmodul einen Parser und einen Scheduler enthält, mit denen die Anweisungen der Dienstnehmer (JB) extrahiert werden und auf die architekturspezifische Laufzeitumgebung des Leitrechners abgebildet werden.

8. Verfahren nach einem der vorhergehenden Ansprüche,
**dadurch gekennzeichnet,**
**dass** das Vorlagedokument (TD) in Form einer Java Serverpage vorliegt.

9. Verfahren nach einem der vorhergehenden Ansprüche,
**dadurch gekennzeichnet,**
**dass** die Dienstnehmer (JB) des Vorlagedokuments (TD) durch eine Java Virtual Machine bearbeitbar sind.

10. System zur dynamischen Generierung strukturierter Dokumente (SD) an mindestens einem mit einem Client (CL) kommunizierenden Leitrechner (SRV), mit
• einem Empfangsmodul (IO) zum Empfang von Anforderungsdaten (REQ) des Clients (CL) am Leitrechner (SRV),
• einem Kontrollmodul (CRT) zur Extraktion von Anfrageparametern aus den Anforderungsdaten (REQ) und zur Abbildung der Anfrageparameter auf den Befehlssatz des Systems und zur dynamischen Generierung des strukturierten Dokuments (SD) unter Verwendung eines am Leitrechner gespeicherten Vorlagedokuments (TD) mit enthaltenen Aufrufen von Dienstnehmern (JB), wobei die Dienstnehmer (JB) unter Hinzuziehung der abgebildeten Anfrageparameter in einer Laufzeitumgebung des Kontrollmoduls (CRT) ausgeführt werden und nach erfolgter Ausführung die dynamischen Inhalte des strukturierten Dokuments (SD) definieren,
• einem Schnittstellenmodul (IF) zur Umsetzung zwischen einem architekturspezifischen Befehlssatz des Leitrechners und dem Befehlssatz des Systems.
